# EUROPEAN PATENT APPLICATION

(11) **EP 2 851 208 A1**
(43) Date of publication of application: **25.03.2015**
(21) Application number: 13185832.6
(22) Date of filing: 24.09.2013
(51) Int. Cl.: B44C 1/26, B29C 67/00, B44F 11/04, E04F 15/10

(54) **Floor with inlay pattern prepared by additive manufacturing techniques**

(71) Applicant: Sika Technology AG, 6340 Baar (CH)
(72) Inventor: Grötzinger, Jochen, 73525 Schwäbisch Gmünd (DE); Urban, Claus, 71640 Ludwigsburg (DE)
(74) Representative: Sika Patent Attorneys

(57) **Abstract**

A method for manufacturing a flooring/coating with an inlay pattern on a substrate, comprising a) preparing one or more inlays by an additive manufacturing process using a digital fabricator on the substrate, or preparing the inlays on a second, different, substrate and subsequently placing the inlays on the substrate to be provided with the flooring/coating, and b1) applying a curable flooring composition on the portions of the substrate not covered by the inlays to embed the inlays in the composition, and curing the composition, or b2) preparing a flooring with a flooring material on the portions of the substrate not covered by the inlays by an additive manufacturing process using a digital fabricator to embed the inlays in the flooring, or b3) applying a curable coating composition to cover the substrate not covered by the inlays and the inlays by the coating composition, and curing the coating composition.

## Description

### Technical field

The invention relates to a method for manufacturing a floor with an inlay pattern and to the floor obtained.

### Background of the invention

It is often desirable to provide floorings with a certain visible pattern. The pattern may be used, for instance, for decorative purposes such as ornaments or information purposes such as symbols, signs and logos. Sometimes more sophisticated patterns including specific functionalities such as patterns including fluorescent materials or indicator materials changing certain properties depending on the conditions, may be desirable.

The incorporation of such patterns in a flooring generally requires elaborate methods, in particular when the pattern is complex. Floorings including a pattern are usually expensive.

There have been proposed a number of methods in order to prepare floorings having a pattern. The following approaches for incorporating patterns such as ornaments into floors are used in practice.

One common approach is a method comprising lamination of sheets or foils printed with the pattern such as an ornament onto a suitable floor and subsequently sealing the floor surface with a transparent resin material. An example of this approach is described in DE-A1-10204546.

The above method has several drawbacks. At first, application of the sheet is difficult and requires sufficient skill and trained applicators. For example, air bubbles can be trapped underneath the sheet and care needs to be exercised at the edges of the sheet to avoid folding up of the edges or cracking of the sealing resin near the edges. Moreover, the sheets need to be prefabricated and cannot be produced on site. In addition, for certain patterns a more graphic representation is desired. Between the printed patterned sheet and the floor there is always a layer of clear resin to bring the sheet to a level surface with respect to the overall floor before application of a top coat. This results in a very different visual impression compared to a pattern having the same thickness as the overall floor. Moreover, in order to improve adhesion of the sheet, the sheet often has small holes which alter the visual impression.

A further common approach is producing the pattern form in a pre-molding process; affixing the pattern form onto the floor, embedding the pattern form into a suitable resin material and then grounding to achieve a level surface. This approach is exemplified in US-B1-6491852.

The above method has also several drawbacks. At first, the pattern form manufactured according to this method need to be prefabricated and cannot be produced on site. Secondly, the pre-manufactured pattern form need to be affixed to the subfloor with a suitable adhesive, thus requiring an extra application step and the introduction of a new material.

A further common approach to fabricate patterns such as ornaments as inlays in a floor is by using dividers, e.g. made of metal, plastic, glass etc. These dividers are embedded in or affixed onto the underlayer floor, and arranged in such a fashion that they define an isolated area with a predetermined shape. The predetermined areas are then filled with a suitable resin material as desired and flooring composition is applied onto the surrounding areas of the underlayer to complete the overall floor which is then ground to a level surface. This process is very common and known to the persons skilled in the art.

The above method of making inlay floors is extremely labor intensive. Each inlay area must be individually isolated with metal strips, and care must be exercised to ascertain that the shapes of the isolated areas are consistent with each other. In addition, the floor must be poured twice, first for the inlay areas and then for the overall floor. Moreover, it is not suitable for embedding inlays with detailed and complex design patterns. Such inlay patterns would necessarily require the use of metal stripes to define dozens of isolated tiny areas, which is not feasible if not impossible. In addition, the inlays and the overall floor are not seamlessly integrated and always have metal strips in between. The presence of metal strips is often artistically undesirable and brings about extra costs.

### Summary of the invention

The invention aims to provide a method for preparing a floor with a pattern which overcomes the problems of the prior art mentioned above. In particular, the object of the invention is to provide a method for preparing a flooring or coating with a pattern which is versatile and cost effective. Specifically, the method should avoid problems related to affixing of pattern forming components or to incorporation of trapped air.

It should also be possible to accommodate the thickness of the pattern forming components with respect to any unevenness of the subfloor. Moreover, it is desirable that complex patterns such as patterns including not or poorly joint substructures, can be obtained.

Surprisingly, these objects could be achieved by a method wherein inlays prepared by an additive manufacturing system are incorporated into a common reactive or curable flooring or coating.

Accordingly, the invention relates to a method for manufacturing a flooring or coating with an inlay pattern on a substrate, the method comprises
a) preparing one or more inlays having a predetermined pattern, color and thickness with an inlay material by an additive manufacturing process using a digital fabricator on the substrate at a predetermined position or predetermined positions or on a second substrate different from the substrate to be provided with the flooring or coating, wherein, if the one or more inlays are prepared on the second substrate, the one or more inlays prepared on the second substrate are placed on the substrate to be provided with the flooring or coating at a predetermined position or predetermined positions, and
b1) applying a curable flooring composition on the portions of the substrate not covered by the one or more inlays prepared so that the one or more inlays are embedded in the flooring composition, and curing the flooring composition, or
b2) preparing a flooring with a flooring material on the portions of the substrate not covered by the one or more inlays by an additive manufacturing process using a digital fabricator so that the one or more inlays are embedded in the flooring, or
b3) applying a curable coating composition on the substrate and the one or more inlays prepared so that the substrate not covered by the one or more inlays and the one or more inlays are covered by the coating composition, and curing the coating composition,
   wherein
c) optionally the cured flooring or coating composition or flooring material with the embedded one or more inlays is mechanically finished and/or sealed with a top coat.

In the flooring or coating obtained, the inlay pattern is generally exposed to the surface or only covered by a transparent top coat or the coating. Since the inlays usually have a different appearance with respect to the surrounding cured flooring or coating composition, the inlay pattern is usually visible. The flooring obtained has preferably a level surface.

An advantage of this process is that the fabrication of the inlay pattern can be carried on site which renders the method easy, versatile and cost effective. Application of the inlays directly onto the substrate such as a subfloor results in a better adhesion to the substrate, and no problems with affixing, trapped air etc. occur.

Moreover, the thickness of the inlays can be adjusted to accommodate any unevenness of the subfloor. The thickness can be further adjusted to the overall floor in the optional mechanical finishing step. It is also possible to generate inlay patterns of complex nature which may include not or poorly joined substructures which is very difficult to incorporate into a floor using pre-manufactured pattern components.

It was particular astonishing that the inlays fabricated using the digital fabricator on site directly on the substrate exhibit inherent contact and adhesion to the substrate and could be manufactured to the precise desired thickness of the floor, irrespective of unevenness in the substrate.

The invention is also related to a floor obtainable by the inventive method. Preferred embodiments are given in the dependent claims. The invention and its preferred embodiments are explained in detail in the following description.

### Detailed description of the invention

Three-dimensional (3D) solid objects are traditionally manufactured by machining techniques which are subtractive processes or forming processes. In recent years, so called additive manufacturing processes for preparing 3D solid objects have attracted great attention. Additive Manufacturing (AM) is defined by the American Society for Testing and Materials (ASTM) as a process of joining materials to make objects from 3D model data, usually layer upon layer, as opposed to subtractive manufacturing methodologies, such as traditional machining and casting. The term rapid prototyping is often used for additive manufacturing of prototypes, whereas the term rapid manufacturing is often used for additive manufacturing of full-scale articles.

The term 3D printing here means additive fabrication of objects through the deposition of a material using one or more print heads or one or more nozzles or another printer technology. 3D printers are additive systems using 3D printing and include one or more nozzles, printheads or orifices for selective deposition of built material. 3D printing is sometimes used to refer to additive manufacturing in general.

A digital fabricator is a device preparing real 3D objects based on CAD data. CAD is the abbreviation for Computer-Aided Design, i.e. the use of a computer for the design of objects.

Machines used for additive manufacturing are also called additive systems. Hence, a digital fabricator for additive manufacturing can also referred to as additive system.

An inlay is an object set or inlaid into a surface of something to provide a certain pattern in that surface.

According to step a) of the method of the invention the one or more inlays are prepared on the substrate or alternatively on a second substrate, wherein it is preferred to prepare the one or more inlays directly onto the substrate on which the flooring or coating is to be prepared.

The substrate on which the flooring or coating is prepared may be of any suitable material such as concrete, screed, metal, ceramic or resin. The substrate is preferably a subfloor, e.g. a cement floor, concrete floor or resin floor. The substrate is preferably a resin floor including substrates such as cement floors or concrete floors with a resin coating thereon. The resin for the resin floor or the resin coating, respectively, may be e.g. an epoxy resin or a polyurethane resin. The resin coating is preferably a resin primer such as an epoxy primer or a polyurethane primer. Such resin primers are conventional.

If the inlay is prepared on a second substrate different from the substrate on which the flooring or coating is to be provided, said second substrate may be also of any suitable materials and examples are those mentioned above for the substrate. However, for the second substrate it is preferred that it has no or little adhesive property with respect to the inlay to be prepared. Thus, the second substrate or the surface thereof may be e.g. made of glass or plastic such as a fluoropolymer, e.g. teflon, and polyethylene, or a substrate pretreated with an anti-adhesive agent such as silicone, oil or a release agent.

According to step a) of the method of the invention one or more inlays having a predetermined pattern, color and thickness are prepared with an inlay material by an additive manufacturing process using a digital fabricator on the substrate at a predetermined position or on a second substrate.

Any known and suitable additive manufacturing process can be used. Suitable examples are binder jetting, directed energy deposition, material extrusion, material jetting, reactive depositing, powder bed fusion, sheet lamination and vat photopolymerization. Preferably a 3D printing process is used. Preferred additive manufacturing processes are material extrusion, reactive deposition and material jetting, in particular material jetting with liquid photopolymers.

Binder jetting is an additive manufacturing processing in which a liquid binding agent is selectively deposited to join powder materials. A binder jetting process starts by first depositing a thin layer of powder on the substrate. One or more printheads or nozzles are then used to print a pattern of the binding agent onto the powder, thus forming the first layer, wherein the binder agent is cured. This procedure is repeated until the object is completed. The powder material used may be e.g. sand, gypsum, plaster or plastic powders or other granular material. Examples for suitable binding agents are epoxy resin or polyurethane resin containing solutions or dispersions.

Directed energy deposition is an additive manufacturing process in which focused thermal energy is used to fuse materials by melting as they are being deposited. The focused thermal energy may be generated by a laser, electron beam or plasma arc.

Material extrusion is an additive manufacturing process in which material is selectively dispensed through a nozzle or orifice onto the substrate. The build material may be a polymer, e.g. a polymer filament, or a paste. The polymer, e.g. a polymer filament, is often extruded through a heated nozzle.

In material jetting the additive manufacturing process comprises selectively depositing droplets of built materials such as liquid photopolymers or wax through a nozzle, printhead or orifice onto the substrate. Material jetting techniques often use multiple arrays of printheads, nozzles or orifices which can be used to print different materials. Material jetting is preferably carried out with a mixture comprising liquid photopolymer as built material. Suitable liquid photopolymers for material jetting are e.g. photopolymerizable resins such as photopolymerizable epoxy resins, methacrylate resins or acrylate resins. A photoinitiator is usually added to the photopolymer. The selectively deposited photopolymer is then cured by photopolymerization. Photopolymerization is activated by a light source. Suitable light sources are e.g. UV light or laser light.

Reactive deposition is an additive manufacturing process in which a chemically curable material in form of a two or more component composition, preferably a two component composition (2-pack), is used. A two or more component composition means a composition comprising two or more separate components each containing a part of the ingredients of the composition. The components are usually mixed just before use since mixing of the components initiates the curing process. The two or more component composition is preferably a curable resin composition comprising a curable resin such as an epoxy resin or a polyurethane resin.

According to reactive deposition, the components of the two or more component composition are mixed and the mixture is selectively deposited through a nozzle, printhead or orifice onto the substrate. After deposition a rapid chemical curing of the mixture takes place. Multiple arrays of printheads, nozzles or orifices may be used. Reactive deposition may be considered as a material jetting process where a chemically curable material in form of a two or more component composition is used as built material.

The powder bed fusion comprises fusing regions of a powder bed with thermal energy which may be generated by a laser, electron beam or plasma arc. A suitable material may be polymer powder or metal powder.

Sheet lamination is an additive manufacturing process in which sheets of material are bonded to form an object. Suitable materials may be metal foil or plastic film.

Vat photopolymerization is an additive manufacturing process in which a liquid photopolymer, which is usually placed in a vat, is selectively cured by light-activated polymerization. Suitable light sources are e.g. UV light or laser light. Suitable photopolymers are the same as mentioned above for material jetting. A photoinitiator is usually added to the photopolymer. Usually dividers are necessary to confine the liquid photopolymer on the predetermined position on the substrate before photopolymerization. When the inlay is prepared by photopolymerization on a second substrate, a vat may be used as the second substrate.

As the digital fabricator any suitable additive system for the additive manufacturing process used can be employed. The digital fabricator is preferably a 3D printer or a robotic additive manufacturing piece of equipment, in particular a robotic 3D printer. The 3D printer may be a motorized 3D printer automatically movable over the substrate. Hereby, the 3D printer can automatically move over the floor thus being able to apply large scale inlay patterns.

A robotic additive manufacturing piece of equipment may include a robotic arm movable in at least one axis to which the application system of the additive system such as a nozzle, a printhead, an orifice or an assembly of nozzles, printheads or orifices is coupled. Examples of robotic additive manufacturing piece of equipments are described for example in EP-B1-1711328 and US 2008/0148683, the disclosure of which is incorporated by reference.

In particular when the inlay is prepared directly on the substrate to be provided with the flooring or coating and not on a second substrate which may be in form of a movable table, it is preferred that the application system of the digital fabricator such as such as a nozzle, a printhead, an orifice or an assembly of nozzles, printheads or orifices is a) coupled with a robotic arm or b) vertically adjustable and movable in x- and y-direction.

The inlays are prepared by using the digital fabricator. The digital fabricator can be placed onto the substrate or optionally next to or over the substrate, e.g. if a robotic system is used. The fabrication system will then fabricate directly on site the inlay according to the predetermined pattern, color and thickness. The inlays fabricated on site directly on the substrate exhibit inherent contact and adhesion to the substrate and can be manufactured to the precise desired thickness of the floor, irrespective of unevenness in the substrate.

In an alternative, less preferred embodiment the one or more inlays are manufactured with the digital fabricator off-site, i.e. on a second substrate different from the substrate to be provided with a flooring or coating. This embodiment may be suitable if a digital fabricator is not available on site or it is difficult to transport it on site.

The one or more inlays fabricated off-site are removed from the second substrate and placed on the substrate to be provided with the flooring or coating at a predetermined position or predetermined positions. In this embodiment, it is usually appropriate to affix the inlay or inlays on the substrate at the predetermined position, for instance by means of a conventional adhesive.

Whether the inlays are prepared directly on the substrate or on the second substrate, it is preferred that the inlays are prepared without using a divider or a mold.

The inlay material, i.e. the material for preparing the inlay, may be any material suitable for the purpose. In particular, the type of material which is suitable depends on the additive manufacturing system used. It may be also necessary to use two or more different inlay materials which are combined during the manufacturing, for instance, if binder jetting is used as explained above. However, also if a single inlay material would be sufficient, it is possible to simultaneously use two or more inlay materials so that the pattern of the inlay may include e.g. different colors. For instance, in binder jetting two different types of powder materials or two or more different binding agents, e.g. differing in color, may be used in combination. If two or more inlays are prepared, the pattern, color, texture, thickness and/or inlay material to be used for each inlay may be the same or different.

Examples of suitable inlay materials in general are a non-reactive material or a physically or chemically curable material or a combination thereof. The non-reactive or inert material refers to a material not undergoing curing. The joining of non-reactive material is effected e.g. by melting, extrusion, fusing or via a binding agent as discussed above. Examples of curable materials are resin materials. A combination of a non-reactive materials and curable materials refers to separately stored materials such as powders and binding agents in binder jetting which are only combined during the manufacturing process.

The chemically curable material may be a single component composition or a two or more component composition, wherein a single component composition and a two component composition are preferred. Single component compositions may be cured by humidity or irradiation. A two or more component composition means a composition comprising two or more separate components each containing a part of the ingredients of the composition. The components are usually mixed just before use since mixing of the components initiates the curing process.

The type of inlay materials to be used in the present invention may vary depending on e.g. the particular additive manufacturing process used, the surrounding flooring material and the intended load of the floor to be prepared.

Suitable inlay materials have been discussed above with respect to the particular additive manufacturing process. For instance, an inlay material comprising a polymer, a paste or a resin may be suitable. Inlay materials comprising a resin may be a one, two or more component composition, preferably a one or two component composition. The resin may be e.g. a chemically curable resin such as an epoxy resin or a polyurethane resin or a photopolymerizable resin such as an epoxy resin, a methacrylate resin or an acrylate resin.

The one or more inlays are prepared with a predetermined pattern, color and thickness. Further, other properties of the inlay such as the texture can be predetermined.

The inlay material may optionally comprise one or more fillers. Fillers may be used to improve properties of the inlay. For instance, addition of silica flour or quartz powder as a filler improves abrasion resistance of the inlay. Examples of suitable fillers are baryte (BaSO₄), calcium carbonate, dolomite, calcium sulfate, talc, kaolin, mica, feldspar, wollastonite, aluminium silicate, zirconium silicate, sand, quartz, silica flour, quartz powder, quartzite, perlite, glass beads, aluminium hydroxide, carbon black, graphite powder and synthetic fibres.

The inlay materials may optionally comprise additives for imparting the predetermined color or texture. Examples of additives for visual effects are coloring agents, e.g. pigments, dyes, colored marble pieces, plastic chips or glass fragments. The additives can generate or support the visual difference of the inlays compared to the surrounding flooring.

The inlay material may optionally include alternatively or additionally additives which add certain functionalities to the inlay, e.g. fluorescent or phosphorescent pigments, e.g. for emergency signs, or indicator additives which change properties such as color depending on the surrounding conditions such as temperature, humidity, pressure, radiation etc.

The pattern of the inlay fabricated may be any desirable pattern. The pattern of the inlay or inlays may e.g. represent one or more of symbols, signs, logos and ornaments. The pattern may include a combination of such patterns. Signs also include characters, letters, words and any text, such as "Emergency Exit" as an example. The ornaments may be of any kind such as geometric forms, schematic or natural representations of any kind of objects and the like, including photographic or image representations. If more than one inlay is prepared each inlay may have a distinct pattern or two or more inlay may form a combined pattern. The overall inlay pattern is formed by all inlays incorporated in the floor.

The inlay may have a complex pattern including not or poorly joined substructures. The interstices between the substructures may be generated by omitting the inlay material in these portions. It is also possible to generate such interstices by depositing the inlay material also in these portions but with a limited thickness which is lower than the thickness of the deposited inlay material in the portions where the substructures are formed. This may be suitable to strengthen the inlay body. The interstices may subsequently be filled with the curable flooring composition in step b1), the flooring material in step b2) or the curable coating composition in step b3).

In step b1) a curable flooring composition is applied on the portions of the substrate not covered by the one or more inlays prepared so that the one or more inlays are embedded in the flooring composition and subsequently the flooring composition is cured. Flooring composition can also be considered as coating compositions used for flooring applications. In general, the curable flooring composition is a self-leveling composition.

According to alternative step b2), the surrounding flooring may also be prepared with a flooring material on the portions of the substrate not covered by the one or more inlays by an additive manufacturing process using a digital fabricator so that the one or more inlays are embedded in the flooring.

According to the third alternative, namely step b3), a curable coating composition is applied on the substrate and the one or more inlays prepared so that the substrate not covered by the one or more inlays and the one or more inlays are covered by the coating composition, and curing the coating composition,

The preparation of the surrounding flooring by application of a curable flooring composition according to alternative step b1) is, however, much more preferred compared to alternative step b2) or alternative step b3).

With respect to step b1), the curable flooring composition may be any one known by the skilled person in this field, for instance mortars. For instance, the curable flooring composition, in particular in form of a mortar, may comprise a hydraulic inorganic binder, in particular cement, a resin binder or a polymer cement hybrid binder, wherein a resin binder is particularly preferred. The flooring composition, preferably a mortar, may be suitably selected from a resin flooring composition, a cement flooring composition, a concrete flooring composition or a polymer-modified cement hybrid flooring composition, a resin flooring composition being particularly preferred. As is known by those skilled in the art, said flooring or coating compositions, respectively, may be one, two, three or more component systems. All these systems are commercially available. The curable flooring composition may be a terrazzo flooring composition.

Examples of suitable polymer-modified cement hybrid flooring compositions are polymer cement concrete (PCC), polymer concrete (PC) and polymer impregnated concrete (PIC), in particular PCC mortars, PC mortars and PIC mortars. Examples for polymers for PCC are polymer dispersions or lattices of styrene-butadiene or methyl methacrylate-butadiene copolymers and epoxy resins (epoxy cement concrete, ECC). Examples for polymers for PC are epoxy resins (EP), polyurethane resins (PUR), methyl methacrylate resins (MMA) and unsaturated polyester resins (UP).

The curable flooring composition is preferably a resin flooring composition comprising a reactive resin, wherein the composition may be a one, two or more component composition. Reactive resins are chemically curable resins. Examples of reactive resins are epoxy resins, polyurethane resins, acrylate resins, methacrylate resins, polyurea resins, and reactive resins based on dispersions. Particularly preferred are epoxy resins and polyurethane resins.

The curable flooring composition may optionally comprise one or more fillers. Fillers may be used to improve properties of the flooring such as abrasion resistance. Examples of suitable fillers are the same as previously mentioned for the inlay material.

The curable flooring composition may comprise coloring agents as additives for imparting the desired color as is known by the skilled person. Examples of suitable coloring agents are pigments, dyes, colored marble pieces, plastic chips and glass fragments. The visual appearance or color of the flooring can be adjusted with relation to the visual appearance of the inlays to distinguish them visually.

The curable flooring composition is preferably liquid or pourable, the viscosity being preferably such that a smooth embedding of the one or more inlays on the substrate is ensured. Preferably possible interstices in the inlay structure as mentioned above may also be filled with the curable flooring or coating composition during application. However, it is also possible to fill a part or all of said optional interstices in a separate step before or after step b1) with the same or another curable flooring composition. This may be necessary when these interstices are very fine or isolated.

The application of the curable flooring composition is preferably carried out by applying or pouring the composition onto the portions of the substrate not covered by the one or more inlays. The composition is often distributed by means of a trowel, a squeegee or a similar tool and will then spread into the final form and a smooth surface will be generated. Accordingly, the flooring composition applied or poured will spread on the substrate around the one or more inlays and cover the remaining portions of the substrate. Thus, the inlays are embedded in the flooring composition. Accordingly, it is possible to achieve a flooring which is seamless between the overall flooring and the inlays embedded therein.

The curable flooring composition is applied to a height which is approximately the same, slightly lower or slightly higher than the thickness of the inlay or inlays embedded. The height or thickness depends on whether and which optional finishing steps are subsequently intended. If the flooring composition is applied to a height higher than the thickness of the inlays, the surface of the inlays will be at least partially covered with the flooring composition. After the curing step, a mechanical finishing can remove excess material to expose the inlay surface.

The curable flooring composition applied will be cured. The curing is conventional. Curing usually takes place at ambient temperature.

With respect to alternative step b2), for the additive manufacturing process and the digital fabricator used, any suitable processes and devices can be used. In particular, the same additive manufacturing process and digital fabricator as used for the preparation of the inlay can be used analogously. Hence, reference is made to suitable and preferred examples mentioned above.

As to the flooring material used in step b2), the same materials and additives mentioned for the inlay material mentioned above can be used so that reference is made to suitable and preferred examples mentioned above. As with the curable flooring composition, the visual appearance or color of the flooring material can be adjusted so that the inlays are visually distinguished.

With respect to alternative step b3), the curable coating composition to be applied to cover the substrate and the one or more inlays is preferably a clear lacquer or a clear coating composition. Accordingly, the coating obtained after curing the curable coating composition is preferably a transparent coating. The transparent coating may be glossy, matte or semi-matte. The coating may influence or improve properties such as scratch resistance, abrasion resistance, lightfastness and resistance to chemicals and/or modify surface gloss (e.g. into matte).

The curable coating composition to be applied may be a resin coating composition, preferably a resin coating composition which is a clear lacquer. Such curable resin coating compositions, which is preferably a clear lacquer, may comprise a reactive resin, examples of which are epoxy resins, polyurethane resins, acrylate resins, methacrylate resins, polyurea resins, and reactive resins based on dispersions.

The curable coating composition to be applied may further comprise additives such as fillers or coloring agents. Examples of suitable fillers are the same as previously mentioned for the inlay material. For the preferred embodiment, where the coating obtained is transparent, suitable additives can be selected which do not affect transparency as is known by the skilled person.

The curable coating composition is preferably liquid or pourable, the viscosity being preferably such that a smooth embedding of the one or more inlays on the substrate is ensured. The application of the curable coating composition is preferably carried out by applying or pouring the composition onto the substrate and the one or more inlays to such an extent that the substrate not covered by the one or more inlays and the one or more inlays are covered. The composition is often distributed by means of a trowel, a squeegee or a similar tool and will then spread into the final form and a smooth surface will be generated. Accordingly, the coating composition applied or poured will spread on the substrate around the one or more inlays and cover the remaining portions of the substrate as well as the inlays.

The curable coating composition applied will be cured. The curing is conventional. Curing usually takes place at ambient temperature.

After the curing step of step b3), a mechanical finishing can remove excess material to expose the inlay surface according to optional step c) explained below. However, according to the preferred embodiment, where a clear lacquer is applied to achieve a transparent coating, this is is usually not suitable. Nevertheless, a mechanical finishing may also be suitable in this case, e.g. in order to smooth the surface. When using a clear lacquer in step b3) so that a transparent coating is achieved, the optional sealing with a top coat according to optional stec c) explained below may usually not be necessary, though it may be suitable in some cases.

After the curing step according to step b1) or step b3) or the preparation of the surrounding flooring according to step b2), the flooring or coating with the inlay pattern thereon may be complete. A level surface can be obtained. It may be, however, suitable to carry out a further finishing treatment. Thus, the cured flooring or coating composition or flooring material with the embedded one or more inlays may be optionally mechanically finished and/or sealed with a top coat.

The optional mechanical finishing or coating may be carried out to bring the inlay and the surrounding flooring into a more planar alignment and to improve smoothness of the surface. Mechanical finishing may be employed on the overall surface of the flooring or coating with the embedded inlays, on the surface of the inlays only or on the surface of the flooring or coating exclusive the embedded inlays.

Examples of mechanical finishing are polishing, grinding, milling, planing or a combination thereof. The mechanical finishing is preferably polishing and/or grinding. By grinding a portion of the surface material is removed as in terrazzo floors to smooth the surface and/or to expose the inlay surfaces. After grinding, the flooring or coating may be polished. In case of step b3), only polishing may be appropriate, if any.

Alternatively or in addition, the surface of the flooring or coating may be optionally sealed with a top coat. The top coat is suitably a transparent top coat, such as a clear coat. The top coat may be glossy, matte or semi-matte. The top coat is prepared as conventional by applying a top coat composition, preferably a clear coating composition, onto the flooring or coating prepared and curing the top coat composition applied. For instance, resin coating compositions can be used for the top coat. The top coat can provide or improve evenness of the surface. Moreover, the top coat may influence or improve properties such as scratch resistance, abrasion resistance, lightfastness and resistance to chemicals and/or modify surface gloss (e.g. into matte).

Further, the invention is concerned with the floor or flooring or coating obtainable by the inventive method, wherein the method where the one or more inlays are directly prepared on the substrate, i.e. on site, is preferred. The floor has suitably a level surface. The inlay pattern is exposed at the surface or covered by the top coat or the coating obtained according to alternative step b3).

The thickness of the flooring or coating obtained may vary in broad ranges. The thickness of the flooring or coating obtained is preferably in the range of e.g. from 0.2 to 5 mm or 0.5 to 5 mm, more preferably from 1 to 3 mm.

In a further alternative second embodiment, the invention is also related to a method for manufacturing a flooring with a pattern on a substrate, the method comprises
a) preparing, preferably printing, one or more pattern forms with a pattern material by an additive manufacturing process using a digital fabricator on the flooring at a predetermined position or predetermined positions, the flooring being located on the substrate, wherein
b) optionally the flooring with the pattern prepared thereon is sealed with a top coat.

The above disclosure with respect to the first embodiment related to inlays also applies to this second embodiment mutatis mutandis. Thus, for instance the above disclosure for suitable and/or preferred embodiments or examples for substrate, pattern, additive manufacturing process, digital fabricator and top coat also applies for the second embodiment. As pattern material the same materials as disclosed above for the inlay materials are suitable. The flooring can be obtained by curing the curable flooring compositions disclosed for the first embodiment, except that no inlays are embedded therein. Suitable thickness ranges of the flooring without inlays are the same as the ranges mentioned above for the first embodiment.

The one or more pattern forms are preferably prepared by printing. In this second embodiment the pattern form is located above the flooring so that the surface of the flooring includes unevenness. Optionally and preferably, the flooring with the prepared pattern thereon is sealed with a top coat. The top coat is suitably transparent. The top coat may be glossy, matte or semi-matte. A clear coat is preferably used as top coat. When the flooring is sealed, the one or more pattern forms are covered by the top coat so that a level surface is obtained.

The pattern available by this second embodiment can be even more complex as in the first embodiment. Thus, complex images or photos etc. could be printed directly onto the floor. As discussed above, the inventive method enables simultaneous use of more than one pattern materials corresponding to the inlay materials, which may have e.g. different colors so that two- or multicolored patterns are possible.

The one or more pattern forms are preferably prepared or printed as a thin film on top of the finished floor. The thickness of the pattern form obtained is preferably e.g. in the range of from 5 to 1000 µm, more preferably from 20 to 200 µm. The application of the pattern is carried out locally on the position of the pattern to be formed and not on the overall surface of the flooring.

The invention is also concerned with a floor or flooring with a pattern on a substrate, obtainable according to the method of the second embodiment.

## Claims

1. A method for manufacturing a flooring or a coating with an inlay pattern on a substrate, the method comprises
a) preparing one or more inlays having a predetermined pattern, color and thickness with an inlay material by an additive manufacturing process using a digital fabricator on the substrate at a predetermined position or predetermined positions, or on a second substrate different from the substrate to be provided with the flooring or coating, wherein, if the one or more inlays are prepared on the second substrate, the one or more inlays prepared on the second substrate are placed on the substrate to be provided with the flooring or coating at a predetermined position or predetermined positions, and
b1) applying a curable flooring composition on the portions of the substrate not covered by the one or more inlays prepared so that the one or more inlays are embedded in the flooring composition, and curing the flooring composition, or
b2) preparing a flooring with a flooring material on the portions of the substrate not covered by the one or more inlays by an additive manufacturing process using a digital fabricator so that the one or more inlays are embedded in the flooring, or
b3) applying a curable coating composition on the substrate and the one or more inlays prepared so that the substrate not covered by the one or more inlays and the one or more inlays are covered by the coating composition, and curing the coating composition,
wherein
c) optionally the cured flooring or coating composition or flooring material with the embedded one or more inlays is mechanically finished and/or sealed with a top coat.

2. The method according to claim 1, wherein the additive manufacturing process is selected from any one of binder jetting, directed energy deposition, material extrusion, material jetting, reactive deposition, powder bed fusion, sheet lamination and vat photopolymerization, wherein material extrusion, material jetting, especially material jetting with liquid photopolymers, and reactive deposition are preferred.

3. The method according to claim 1 or claim 2, wherein the digital fabricator is selected from any one of a 3D printer and a robotic additive manufacturing piece of equipment.

4. The method according to claim 3, wherein the 3D printer is a motorized 3D printer automatically movable over the substrate.

5. The method according to any one of claims 1 to 4, wherein the pattern of the inlay or inlays represents one or more of symbols, signs, logos and ornaments or a combination thereof.

6. The method according to any one of claims 1 to 5, wherein two or more inlays are prepared, wherein the pattern, color, texture, thickness and/or inlay material to be used for each inlay may be the same or different.

7. The method according to any one of claims 1 to 6, wherein the curable flooring composition comprises a hydraulic inorganic binder, in particular cement, a resin binder or a polymer cement hybrid binder, wherein the flooring composition is preferably a resin flooring composition.

8. The method according to any one of claims 1 to 7, wherein the inlay material is selected from a non-reactive material, a physically or chemically curable material or a combination thereof, wherein the chemically curable material is preferably a one or two component composition.

9. The method according to any one of claims 1 to 8, wherein the inlay material includes one or more fillers, one or more additives for visual effects such as coloring, fluorescent or phosphorescent effects, and/or one or more indicator additives changing properties such as visual properties depending on surrounding conditions.

10. The method according to any one of claims 1 to 9, wherein the one or more inlays are prepared without using a divider or a mold.

11. A floor with a flooring or coating with an inlay pattern on a substrate, obtainable according to a method according to any one of claims 1 to 10.

12. The floor according to claim 11, wherein the one or more inlays are directly prepared on the substrate.

13. A method for manufacturing a flooring with a pattern on a substrate, the method comprises
a) preparing one or more pattern forms with a pattern material by an additive manufacturing process using a digital fabricator on the flooring at a predetermined position or predetermined positions, the flooring being located on the substrate, wherein
b) optionally the flooring with the prepared pattern thereon is sealed with a top coat.

14. The method according to claim 13, wherein the pattern form is prepared, preferably printed, as a thin film on the flooring.

15. A floor with a flooring with a pattern on a substrate, obtainable according to a method according to any one of claims 13 and 14.
